Europäisches Patentamt

European Patent Office

Office européen des brevets

(19)

(11) **EP 0 441 731 B1**

(12) **FASCICULE DE BREVET EUROPEEN**

(45) Date de publication et mention
de la délivrance du brevet:
**02.01.1997 Bulletin 1997/01**

(51) Int Cl.⁶: **H04L 5/06**

(21) Numéro de dépôt: **91460002.8**

(22) Date de dépôt: **05.02.1991**

(54) **Procédé de diffusion de données à entrelacement temps-fréquence et démodulation cohérente**

Verfahren zur Datenverbreitung mit Zeit-Frequenzverschachtelung und kohärenter Demodulation

Method of data broadcasting using time-frequency interleaving and coherent demodulation

(84) Etats contractants désignés:
**DE GB**

(30) Priorité: **06.02.1990 FR 9001491**

(43) Date de publication de la demande:
**14.08.1991 Bulletin 1991/33**

(73) Titulaires:
• **FRANCE TELECOM
75015 Paris (FR)**
• **TELEDIFFUSION DE FRANCE
75932 Paris Cédex 15 (FR)**

(72) Inventeurs:
• **Helard, Jean-François
F-35700 Rennes (FR)**
• **Lemesle, Jean-Michel
F-35700 Rennes (FR)**

• **Halbert-Lassalle, Roselyne
F-35000 Rennes (FR)**
• **Le Floch, Bernard
F-35000 Rennes (FR)**

(74) Mandataire: **Corlau, Vincent
c/o Cabinet Vidon,
Immeuble Germanium,
80 avenue des Buttes de Coesmes
35700 Rennes (FR)**

(56) Documents cités:
**EP-A- 0 008 521            GB-A- 2 206 768**

• **IEE PROCEEDINGS I. SOLID- STATE &
ELECTRON DEVICES. vol. 136, no. 1, février
1989, STEVENAGE GB pages 11 - 19; J.
Pennington: "Techniques for Medium-speed
Data Transmission over HF Channels"**

## Description

Le domaine de l'invention est celui de la diffusion de données numériques destinées à être reçues notamment par des mobiles circulant en milieu urbain, c'est-à-dire dans des conditions de multipropagation (processus de Rayleigh) engendrant des phénomènes d'évanouissement (fading), et en présence de parasites et de brouillage. Plus généralement, l'invention concerne la diffusion de signaux numériques dans des canaux affectés de trajets multiples dont les caractéristiques varient dans le temps.

L'invention s'applique plus particulièrement, mais non exclusivement, au système de radiodiffusion sonore numérique dénommé système COFDM (Coding Orthogonal Frequency Division Multiplex (Multiplexage de Fréquences Orthogonales Codées)), tel que décrit dans les demandes de brevets françaises 86 09622 du 2 juillet 86, et 86 13271 du 23 septembre 86 au nom des mêmes déposants.

Ce système de diffusion numérique est basé sur l'utilisation conjointe d'un dispositif de codage de canal et d'un procédé de modulation par multiplexage de fréquences orthogonales.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence f- temps t et à émettre simultanément des jeux d'éléments numériques sur N voies de diffusion parallèles au moyen d'un multiplex de fréquences utilisant des porteuses orthogonales. En particulier, ce type de modulation permet d'éviter que deux éléments successifs du train de données soient émis à la même fréquence.

Le processus de codage connu vise dans son ensemble à permettre le traitement des échantillons issus du démodulateur pour absorber l'effet des variations d'amplitude du signal reçu, dues au processus de Rayleigh. Le codage est avantageusement un codage convolutif, éventuellement concaténé à un codage du type Reed-Solomon. Le décodage peut être avantageusement un décodage de Viterbi à décision douce.

De façon connue, les éléments numériques codés sont de plus entrelacés, en temps et en fréquence, de façon à maximiser l'indépendance statistique des échantillons vis-à-vis du processus de Rayleigh et du caractère sélectif du canal.

La démodulation du signal reçu peut être différentielle ou cohérente.

On sait que la démodulation cohérente offre, en théorie, une meilleure résistance au bruit que la démodulation différentielle, permettant d'obtenir un gain en performance d'environ 3 dB. Toutefois, il apparaît clairement que, dans les conditions de réception spécifiques du procédé, il est particulièrement difficile d'extraire du signal modulé une référence de phase et d'amplitude pour chaque porteuse du multiplex. L'erreur faite sur l'estimation des porteuses entraîné donc, dans le cas de la démodulation cohérente, une dégradation sensible des performances. Ceci est d'autant plus vrai dans le cas d'évanouissements profonds et rapides rencontrés lorsque la fréquence porteuse ou la vitesse du véhicule augmente.

Le document US-4 881 245 propose d'insérer des éléments de référence de démodulation parmi les éléments de données formant le multiplex transmis. Selon cette technique, il est nécessaire que chaque élément de données soit directement encadré par deux éléments de référence (dans le domaine temporel, dans le domaine fréquentiel ou en diagonale). Cette technique présente deux inconvénients : une perte importante en débit utile (4 éléments sur 9 sont des éléments de référence) et la nécessité de trois traitements distincts dans les récepteurs.

La démodulation différentielle constitue une autre solution dont l'intérêt essentiel réside dans sa simplicité de mise en oeuvre et son absence d'inertie après un évanouissement profond. C'est donc cette seconde approche qui a été utilisée, pour valider les principes généraux du système COFDM, au détriment d'une dégradation des performances d'environ 3 dB par rapport à la démodulation cohérente.

L'invention a pour objectif de pallier ces inconvénients, et de montrer qu'il existe cependant une possibilité élégante de mettre en oeuvre une démodulation cohérente.

Plus précisément, l'invention a pour but de fournir un procédé de diffusion numérique à entrelacement temps-fréquence permettant une démodulation cohérente, en facilitant l'extraction de références de phase et d'amplitude.

Un autre objectif de l'invention est de limiter les pertes de capacité de transmission d'un tel procédé.

Ces objectifs, ainsi que d'autres qui apparaîtront par la suite, sont atteints par un procédé de diffusion de données numériques selon la revendication 1.

Ainsi, il est possible de déterminer, par interpolation, une référence de phase et d'amplitude pour chacun des éléments numériques, et donc de réaliser une démodulation cohérente.

Il est nécessaire, pour effectuer une interpolation efficace, de disposer d'un nombre suffisant d'éléments de référence.

De façon avantageuse, ces éléments de référence sont répartis dans l'espace fréquentiel de telle façon que l'écart fréquentiel $\Delta F$ entre deux desdits éléments de référence est inférieur ou égal à $1/(2.Tm)$, Tm étant la valeur maximale de l'étalement de la réponse impulsionnelle du canal de transmission, et, dans l'espace temporel, de façon que l'écart temporel $\Delta T$ entre deux desdits éléments de référence est inférieur ou égal à $1/(2.f_{max})$, $f_{max}$ étant la fréquence Doppler maximale déterminée selon l'équation $f_{max} = f_0.v/c$, où :

- $f_0$ est la fréquence porteuse maximale,
- v est la vitesse de déplacement maximale desdits mobiles,
- c est la célérité de la lumière.

Ces éléments peuvent être placés de façon quelconque dans l'espace temps-fréquence. Cependant, on les disposera de préférence de façon qu'ils soient équirépartis dans l'espace fréquence f- temps t, et par exemple, en quinconce dans ledit espace fréquence f- temps t, par rapport à la dimension fréquentielle et/ou à la dimension temporelle.

L'invention concerne également des récepteurs susceptibles d'exploiter ce procédé.

Avantageusement, de tels récepteurs comprennent des moyens d'analyse desdits éléments de référence, de façon à déterminer par interpolation la réponse du canal de transmission en phase et/ou en amplitude pour chacun desdits éléments numériques.

Selon un mode de réalisation avantageux, lesdits moyens d'analyse comprennent:

- des premiers moyens de mémorisation des données avant filtrage d'interpolation,
- des moyens de filtrage d'interpolation selon l'axe fréquentiel,
- des seconds moyens de mémorisation des résultats dudit filtrage selon l'axe fréquentiel,
- des moyens de filtrage d'interpolation selon l'axe temporel, pour chacune desdites fréquences porteuses.

De façon préférentielle, lesdits moyens de filtrage d'interpolation selon l'axe fréquentiel comprennent un filtre à réponse impulsionnelle finie et lesdits moyens de titrage d'interpolation selon l'axe temporel comprennent une batterie de N filtres à réponse impulsionnelle finie, fonctionnant indépendamment sur chacune desdites N fréquences porteuses.

Ces récepteurs peuvent alors avantageusement comprendre des moyens de démodulation cohérente, par projection des porteuses modulées par lesdits éléments numériques, cette projection s'effectuant sur les résultats fournis par lesdits moyens d'analyse.

D'autres caractéristiques et avantages de l'invention apparaîtront à la lecture de la description suivante d'un mode de réalisation préférentiel de l'invention, donné à titre d'exemple illustratif et non limitatif, et des dessins annexés dans lesquels:

- la figure 1 est un schéma synoptique d'une chaîne d'émission-réception mettant en oeuvre le procédé de l'invention;
- la figure 2 est une représentation du multiplex de fréquences porteuses dans le domaine temps-fréquence, comprenant des éléments de référence et des éléments d'information;
- la figure 3 illustre le fonctionnement du filtrage d'interpolation selon l'invention sur l'axe fréquentiel;
- la figure 4 illustre le fonctionnement du filtrage d'interpolation selon l'invention sur l'axe temporel;
- la figure 5 illustre un exemple de réalisation du module d'estimation des porteuses selon l'invention;
- les figures 6A, 6B et 6C illustrent différents modes de mise en place des éléments de référence.

Les différents aspects du mode de réalisation qui va être décrit ci-après concernent plus particulièrement la radiodiffusion sonore numérique vers des mobiles.

Toutefois, il est clair que le principe de diffusion numérique à haut débit de l'invention peut s'appliquer à tout type de communication, notamment dans des canaux soumis au processus de Rayleigh.

Dans l'application de radiodiffusion sonore numérique, un objectif peut être par exemple de transmettre seize programmes stéréophoniques dans une bande de fréquence de 8 MHz de largeur, avec un débit numérique de l'ordre de 250 kbits après compression par programme stéréophonique.

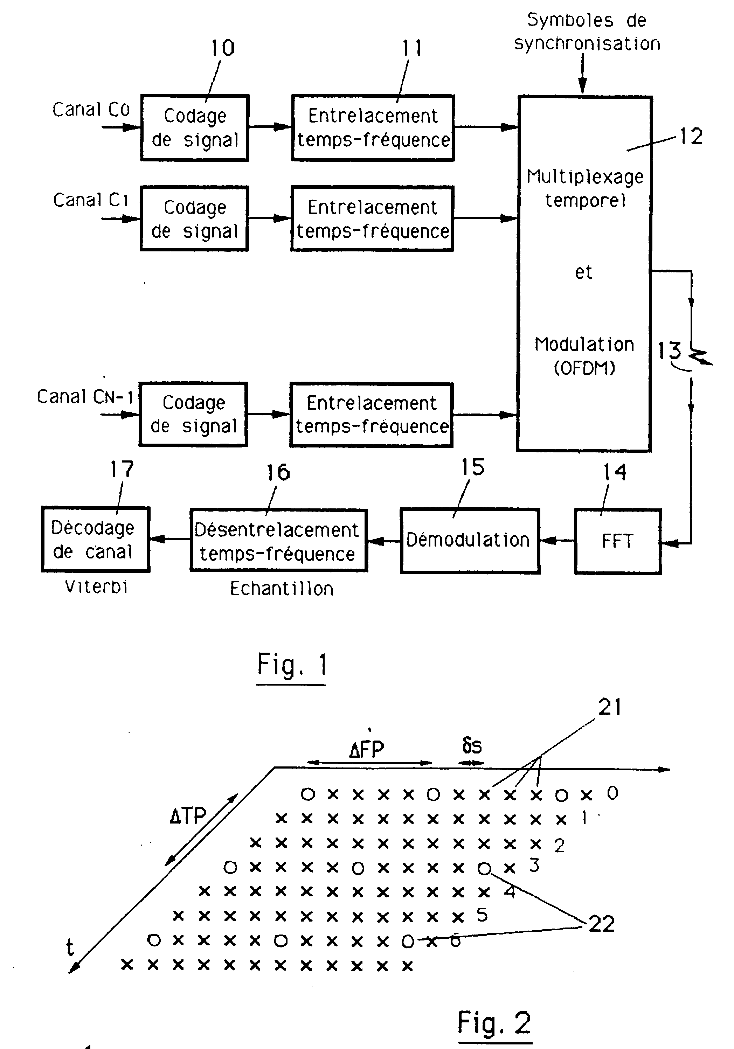

Une chaîne de transmission telle que décrite dans les demandes de brevet mentionnées en préambule est présentée en figure 1.

Chacun des N (16) canaux $C_0$ à $C_{n-1}$ subit en parallèle un codage 10, puis un entrelacement temps-fréquence 11 sur une voie séparée, avant d'être soumis collectivement à un processus 12 de multiplexage temporel et de modulation OFDM.

Le codage 10 est avantageusement du type convolutif. L'entrelacement temps-fréquence 11 a pour objectif de brasser les éléments numériques de chaque canal afin de leur conférer une indépendance maximale vis-à-vis des parasites et du brouillage du canal de diffusion 13.

La modulation OFDM, consiste à moduler des symboles constitués chacun d'un multiplex de fréquences orthogonales diffusées simultanément sur N voies. Cette opération peut être réalisée par une transformation de Fourier sur la séquence numérique codée et entrelacée de chaque canal $C_i$.

A titre d'exemple, dans une bande de fréquence de 8 MHz, on peut définir 512 fréquences porteuses séparées de 15 625 Hz. Parmi celles-ci 448 sont utilisables, après élimination de la fréquence centrale du spectre et des porteuses latérales (1/8e du spectre) pour tenir compte des contraintes de filtrage.

La chaîne de réception comporte les étapes classiques de filtrage et de transposition en bande de base 14, de démodulation 15, de désentrelacement en fréquence 16 et de décodage 17 du canal désentrelacé, avantageusement du type décodage de Viterbi à décision douce.

Le signal émis est constitué par une suite de symboles de modulation formant un multiplex de N porteuses orthogonales.

Soit $\{f_k\}$ l'ensemble des fréquences porteuses considérées, avec:

$$f_k = f_0 + k/t_s, k = 0 \text{ à } N\text{-}1$$

où $t_s$ représente la durée allouée à un symbole de modulation.

On peut alors définir la base de signaux élémentaires suivante:
$\Psi_{j,k}(t)$ avec $k = 0$ à $N$-1, $j = -\infty$ à $+\infty$ :

$$\Psi_{j,k}(t) = g_k(t - jT_s)$$

avec :

$0 \le t < T_s :$     $g_k(t) = e^{2i\pi fkt}$
ailleurs :     $g_k(t) = 0$

Soit d'autre part un ensemble de nombres complexes $\{C_{j,k}\}$ prenant ses valeurs dans un alphabet fini, représentant le signal de données émis.

Le signal OFDM associé s'écrit alors :

$$x(t) = \text{Re}\left( \sum_{j=-\infty}^{+\infty} \sum_{k=0}^{N-1} C_{j,k}\ \psi_{j,k}(t) \right)$$

Pour s'affranchir de tout problème de sélectivité en fréquence du canal, un intervalle de garde de durée $\Delta$ est inséré devant chaque signal $\Psi_{j,k}(t)$ afin d'absorber le brouillage intersymboles.

$t_s$ représente donc la durée du signal utile, $\Delta$ la durée de l'intervalle de garde et $T_s = t_s + \Delta$, la durée du symbole.

Le canal de transmission peut être modélisé par la relation :

$$Y_{j,k} = H_{j,k}\ C_{j,k} + N_{j,k}$$

où

- $H_{j,k}$ est la réponse du canal à la fréquence $f_k$ et à l'instant $jT_s$.
- $N_{j,k}$ est un bruit gaussien complexe.

Le dispositif de récupération de porteuse utilisé en démodulation cohérente doit pouvoir fournir une estimation de la réponse du canal à tout instant et pour toutes les fréquences porteuses, sous la forme :

$$H_{j,k} = \rho_{j,k}\ e^{i\varphi j,k}$$

où :

- $\rho_{j,k}$ est l'amplitude de la réponse du canal,
- $\varphi_{j,k}$ est la phase de la réponse du canal.

L'idée de base de l'invention consiste à utiliser certaines porteuses judicieusement réparties dans le domaine temps-fréquence comme fréquences pilotes de référence de phase et/ou d'amplitude.

En d'autres termes, on insère parmi les données à transmettre et à des emplacements prédéterminés des mots fixes, servant de référence en amplitude et/ou en phase à la réception.

La figure 2 illustre un exemple de répartition de ces fréquences pilotes dans le domaine temps-fréquence. Parmi les éléments d'information 21 sont introduits des éléments de référence 22, de position dans le domaine temps-fréquence et de valeur connues des récepteurs, permettant l'estimation de la réponse du canal.

Celle-ci peut être ensuite obtenue à tout instant $jT_s$ et pour toutes les fréquences $f_k$ par filtrage d'interpolation, si l'emplacement entre les fréquences pilotes prend en compte les caractéristiques du milieu de transmission à trajets multiples.

la première caractéristique de ce milieu est la variation en fréquence de la fonction de transfert du canal. On sait que la bande de cohérence fréquentielle $(\Delta f)_c$ est directement déterminée par l'inverse de l'étalement de la réponse impulsionnelle du canal Tm :

$$(\Delta f)_c \approx 1/Tm.$$

On pourra donc obtenir une bonne estimation de la réponse du canal à toutes les fréquences $f_k$ si l'écart $\Delta F$ entre deux fréquences pilotes vérifie la relation suivante :

$$\Delta F \leq (\Delta f)_c/2.$$

La deuxième caractéristique du milieu de transmission est la variation temporelle de la fonction de transfert du canal. La cohérence temporelle $(\Delta t)_c$ du canal peut être donnée par :

$$(\Delta t)_c \approx 1/f_{max}$$

où fmax est la fréquence de Doppler maximum, déterminée par:

$$f_{max} = f_0 \cdot (v/c)$$

avec

$f_0$ :     fréquence porteuse maximale,
v :     vitesse maximale du véhicule,
c :     célérité de la lumière.

Ainsi, on aura une bonne estimation de la réponse du canal à tous les instants $jT_s$ si les symboles de référence apparaissent avec une périodicité $\Delta T$ telle que :

$$\Delta T \leq 1/(2f_{max}) = (\Delta t)_c/2.$$

La fonction d'interpolation permettant d'obtenir ces estimations peut notamment être réalisée par des techniques de filtrage numérique à réponse impulsionnelle finie. Toutefois, toutes les techniques de filtrage connues peuvent être envisagées, et par exemple le filtrage récursif.

Dans un premier temps, ce filtrage d'interpolation est réalisée selon l'axe fréquentiel, sur chacun des symboles portant des échantillons de référence, c'est-à-dire, dans l'exemple de la figure 2, sur les lignes 0, 3, 6 ...

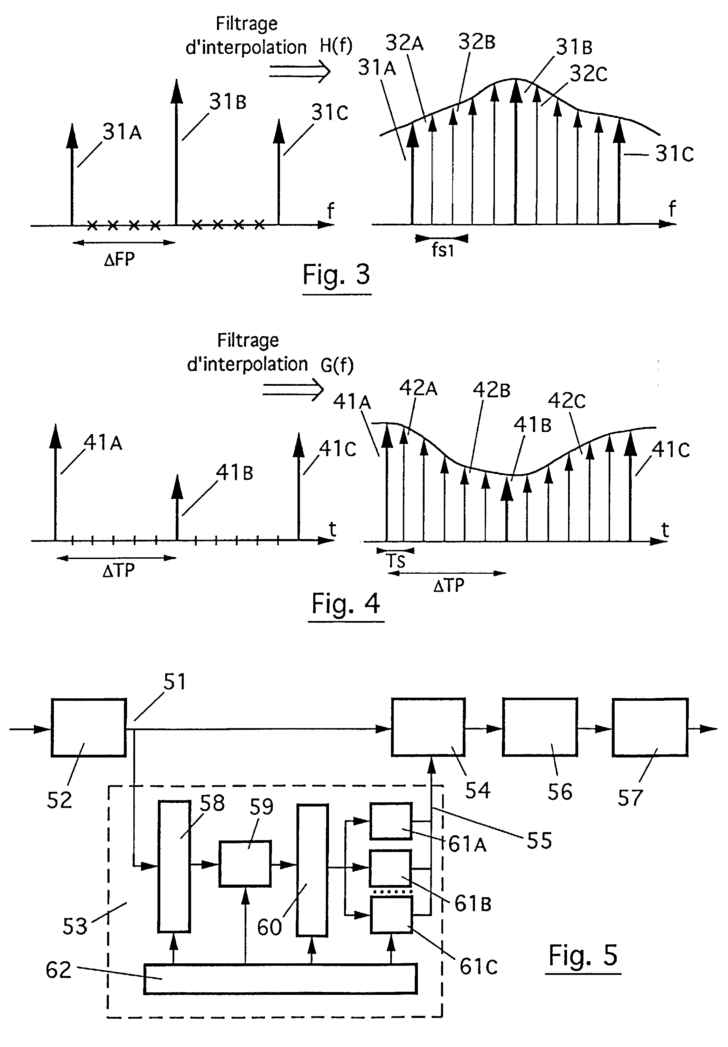

La figure 3 représente le principe de reconstruction par interpolation de la réponse du canal. A partir des échantillons de référence reçus $31_A$, $31_B$, $31_C$, correspondant à l'émission à un mot de référence identique, et espacés de $\Delta F$, un filtre de fonction de transfert H(f) à réponse impulsionnelle finie permet de reconstituer les échantillons manquants $32_A$, $32_B$, $32_C$, ... distants de $fs_1$, par interpolation.

Pour cela, le filtre de fonction de transfert H(f) doit avoir une fréquence d'échantillonnage $fs_1$ égale à $(1/t_s)$. Le nombre de coefficients Q de ce filtre doit d'autre part vérifier la relation : $Q >> (\Delta F/fs_1)$.

Dans un second temps, un deuxième filtrage d'interpolation utilisant les résultats précédents est effectué, sur l'axe temporel, pour chaque fréquence.

Ce filtrage est réalisé par une batterie de N filtres en parallèle, chacun travaillant indépendamment sur une fréquence fk.

La figure 4 illustre cette interpolation dans le domaine temporel. Les échantillons de référence reçus $41_A$, $41_B$, $41_C$ permettent, par l'intermédiaire du filtre de fonction de transfert G(F) à réponse impulsionnelle finie, la détermination des échantillons manquants $42_A$, $42_B$, $42_C$ ... espacés de $T_s$.

La fréquence d'échantillonnage de chacun des filtres de fonction de transfert G(F) doit être:

$$fs_2 = (1/T_s)$$

et leur nombre P de coefficients doit vérifier:

$$P > > (\Delta T/T_s).$$

La figure 5 présente un mode de réalisation du module d'estimation des porteuses selon l'invention.

Les données 51 issues du module de désentrelacement en fréquence 52, qui réalise avantageusement une transformation de Fourier, sont dirigées d'une part vers un module 53 d'estimation des porteuses, et d'autre part vers un module 54 de projection sur les références.

Ce module 54 réalise, à l'aide de l'estimation des porteuses 55, une démodulation cohérente des données 51. Après démodulation, le récepteur réalise les opérations de désentrelacement 56 et de décodage 57.

Dans un mode de réalisation particulier, l'estimation des porteuses peut être réalisée de la façon suivante: les données 51 sont stockées dans une mémoire 58. Lorsque le nombre voulu de données est disponible en mémoire, un premier filtrage 59 est réalisé, selon l'axe fréquentiel. Les données issues de ce filtrage sont stockées dans une seconde mémoire 60, puis filtrées salon l'axe temporel. Ce filtrage temporel est effectué par N filtres indépendants $61_A$, $61_B$, $61_C$ ... agissant chacun sur une fréquence porteuse.

Ces différents modules 58, 59, 60, $61_A$, $61_B$, $61_C$ sont pilotés par un séquenceur 62, qui assure la bonne synchronisation des opérations.

Cet exemple de réalisation n'est pas limitatif de l'invention. De nombreuses autres possibilités apparaîtront à l'homme du métier. Notamment, il est possible de réaliser d'abord le filtrage temporel, puis ensuite le filtrage fréquentiel.

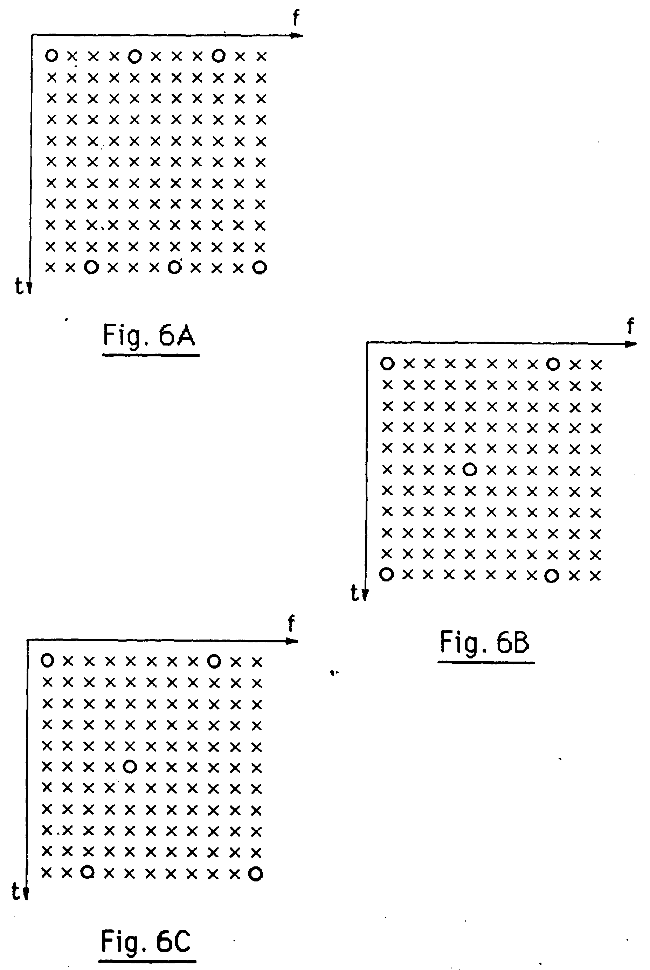

Avantageusement, les éléments de référence sont placés régulièrement. Les figures 6A 6B et 6C illustrent différentes possibilités d'implantation. La figure 6A présente le cas d'une implantation en quinconce, par rapport aux fréquences, la figure 6B une implantation en quinconce par rapport au temps, et la figure 6C en quinconce par rapport aux deux dimensions.

A titre d'exemple d'application, on présente ci-dessous les caractéristiques du procédé de l'invention dans le cas de la modulation COFDM telle qu'elle est actuellement définie.

Le nombre de porteuses du multiplex est N = 448. Chaque symbole est de longueur $T_s = 80$ µs, et a donc une durée utile de $t_s = 64$ µs. L'écart entre les porteuses fs est donc de 15625 Hz.

Si on considère un étalement de la réponse impulsionnelle du canal Tm = 8 µs, ce qui correspond au cas extrême d'un écart de 2,5 km entre un signal et son écho simple, la bande de cohérence fréquentielle $(\Delta F)_c$ est de 125 kHz. L'écart entre deux éléments de référence doit donc être tel que $\Delta F_p \le 62,5$ kHz.

Une référence toutes les quatre porteuses permet donc d'obtenir une bonne interpolation sur l'axe fréquentiel.

Avec une fréquence centrale f0 de 1 GHz et une vitesse du véhicule de 100 km/h, la fréquence Doppler maximale fmax est d'environ 100 Hz. La bande de cohérence temporelle du canal $(\Delta f)_c$ étant de 10 ms, on en déduit:

$$TP \le 5 \text{ ms.}$$

En choisissant par exemple $\Delta TP = 0.8$ ms, on a besoin d'une référence tous les 10 symboles :

$$\frac{\Delta Tp}{T_s} = \frac{800}{80} = 10$$

Dans ce cas, les éléments de référence n'occupent donc qu'un quarantième de la ressource, ce qui représente une perte relativement faible.

## EP 0 441 731 B1

**Revendications**

1. Procédé de diffusion de données numériques vers des récepteurs, notamment pour la radiodiffusion à haut débit vers des récepteurs mobiles, du type comprenant les étapes suivantes :

   - codage desdites données numériques délivrant une série d'éléments numériques ;
   - entrelacement temps-fréquence desdits éléments numériques, de façon à les répartir dans l'espace fréquence f- temps t ;
   - modulation de chacune des fréquences porteuses d'un multiplex de fréquences porteuses orthogonales par des éléments numériques ; et
   - émission dudit multiplex de fréquences porteuses,

   procédé caractérisé en ce que certains desdits éléments numériques sont des éléments de référence (22), dont la valeur et la position dans ledit espace fréquence f - temps t sont connues desdits récepteurs, au moins deux éléments de données étant insérés entre deux éléments de référence, dans l'espace temps et dans l'espace des fréquences,
   et en ce que, à réception, on effectue le traitement suivant :

   - estimation de la réponse du canal de transmission pour chacun desdits éléments de référence (22), de façon à obtenir des échantillons de référence de démodulation reçus $(31_i)$ ;
   - détermination d'un échantillon de référence de démodulation $(32_i)$ pour toutes lesdites fréquences porteuses et à chaque instant de transmission, par application d'un filtrage d'interpolation appliqué auxdits échantillons de référence de démodulation reçus $(31_i)$ ; et
   - démodulation cohérente desdites fréquences porteuses, par projection de chaque porteuse modulée reçue par un élément de données sur l'échantillon de référence de démodulation $(32_i)$.

2. Procédé selon la revendication 1, caractérisé en ce que l'écart fréquentiel $\Delta F$ entre deux desdits éléments de référence (22) est inférieur ou égal à $1/(2.Tm)$, Tm étant la valeur maximale de l'étalement de la réponse impulsionnelle du canal de transmission.

3. Procédé selon l'une quelconque des revendications 1 ou 2, caractérisé en ce que l'écart temporel $\Delta T$ entre deux desdits éléments de référence (22) est inférieur ou égal à $1/(2.f_{max})$, $f_{max}$ étant la fréquence Doppler maximale déterminée selon l'équation $f_{max} = f_0.v/c$, où :

   - $f_0$ est la fréquence porteuse maximale,
   - v est la vitesse de déplacement maximale desdits mobiles,
   - c est la célérité de la lumière.

4. Procédé selon l'une quelconque des revendications 1 à 3, caractérisé en ce que lesdits éléments de référence (22) sont équirépartis dans l'espace fréquence f- temps t, et par exemple, en quinconce dans ledit espace fréquence f- temps t, par rapport à la dimension fréquentielle et/ou à la dimension temporelle.

5. Récepteur d'un signal numérique formé d'un multiplex de fréquences orthogonales modulées chacune par des éléments numériques, lesdits éléments numériques correspondant au codage de données numériques et étant entrelacés en temps et en fréquence,
   caractérisé en ce qu'il connaît la valeur et la position dans l'espace fréquence f - temps t d'éléments de référence (22) insérés parmi lesdits éléments numériques, au moins deux éléments de données étant insérés entre deux éléments de référence, dans l'espace temps et dans l'espace des fréquences, et
   en ce qu'il comprend des moyens (53) d'analyse desdits éléments de référence (22), de façon à déterminer par interpolation un élément de référence de démodulation interpolé représentatif de la réponse du canal de transmission en phase et/ou en amplitude pour chacun desdits éléments numériques, lesdits moyens (53) d'analyse comprenant :

   - des premiers moyens (58) de mémorisation des éléments de référence reçus,
   - des moyens (59) de filtrage d'interpolation selon l'axe fréquentiel des éléments de référence reçus,
   - des seconds moyens (60) de mémorisation des résultats dudit filtrage selon l'axe fréquentiel,
   - des moyens $(61_A, 61_B, 61_C)$ de filtrage d'interpolation selon l'axe temporel, pour chacune desdites fréquences porteuses.

**6.** Récepteur selon la revendication 5, caractérisé en ce que lesdits moyens (59) de filtrage d'interpolation selon l'axe fréquentiel comprennent un filtre à réponse impulsionnelle finie.

**7.** Récepteur selon l'une quelconque des revendications 5 ou 6, caractérisé en ce que lesdits moyens (61$_A$, 61$_B$, 61$_C$) de filtrage d'interpolation selon l'axe temporel comprennent une batterie de N filtres à réponse impulsionnelle finie, fonctionnant indépendamment sur chacune desdites N fréquences porteuses.

**8.** Récepteur selon l'une quelconque des revendications 5 à 7, caractérisé en ce qu'il comprend des moyens de démodulation cohérente (54), par projection des porteuses modulées par lesdits éléments numériques, cette projection s'effectuant sur les résultats fournis par lesdits moyens (53) d'analyse.

## Patentansprüche

**1.** Verfahren für das Senden digitaler Daten zu Empfängern, insbesondere für den Hochleistungsfunk zu beweglichen Empfängern, von der Art, die die folgenden Schritte umfaßt:

- Kodierung dieser digitalen Daten, die eine Reihe digitaler Elemente liefert;
- Zeit-Frequenz-Verschachtelung dieser digitalen Elemente, um sie über den Frequenz f Zeit t - Raum zu verteilen;
- Modulation einer jeden Trägerfrequenz eines Frequenzmultiplexes orthogonaler Trägerfrequenzen durch digitale Elemente; und
- Senden des Trägerfrequenzmultiplexes,

dadurch gekennzeichnet, daß es sich bei einigen der digitalen Elemente um Referenzelemente (22) handelt, deren Werte sowie deren Position im Frequenz f - Zeit t - Raum vom Empfänger bereits bekannt sind, wobei mindestens zwei Datenelemente zwischen zwei Referenzelementen im Zeitraum und im Frequenzraum eingefügt sind, und daß beim Empfang die folgende Behandlung erfolgt:

- Abschätzung der Antwort des Sendekanals für jedes der Referenzelemente (22), um abgetastete Referenzwerte der empfangenen Demodulationswerte (31$_i$) zu erhalten;
- Festlegung eines abgetasteten Referenzwertes (32$_i$) für alle diese Trägerfrequenzen sowie für jeden Sendezeitpunkt, durch Anwendung einer Interpolationsfilterung auf die abgetasteten Referenzwerte der empfangenen Demodulationswerte (31$_i$); und
- kohärente Demodulation der Trägerfrequenzen durch Projektion einer jeden modulierten Trägerfrequenz, die von einem Datenelement empfangen wird, auf den abgetasteten Demodulationsreferenzwert (32$_i$).

**2.** Verfahren gemäß Anspruch 1, dadurch gekennzeichnet, daß der Frequenzabstand $\Delta F$ zwischen zwei Referenzelementen (22) kleiner als ½ · Tm), wobei Tm der Höchstwert der Ausbreitung der Impulsantwort des Sendekanals ist.

**3.** Verfahren gemäß einem der Ansprüche 1 oder 2, dadurch gekennzeichnet, daß der Zeitabstand $\Delta T$ zwischen zwei der Referenzelemente (22) kleiner oder gleich $1/(2 \cdot f_{max})$ ist, wobei $f_{max}$ die maximale Dopplerfrequenz ist, die mit der Gleichung $f_{max} = f_0 \cdot v/c$ ist; dabei ist:

- $f_0$ die maximale Trägerfrequenz
- v die höchste Fahrgeschwindigkeit der bewegten Objekte,
- c die Lichtgeschwindigkeit.

**4.** Verfahren gemäß einem der Ansprüche 1 bis 3, dadurch gekennzeichnet, daß die Referenzelemente (22) gleichmäßig im Frequenz f - Zeit t - Raum bezüglich der Frequenz und/oder der Zeit verteilt sind, und, beispielsweise, an beliebiger Stelle im Frequenz f - Zeit t - Raum.

**5.** Empfänger eines digitalen Signals, das aus einem Multiplex orthogonaler Trägerfrequenzen besteht, die jeweils durch digitale Elemente moduliert sind, wobei diese digitale Elemente der Kodierung der digitalen Daten entsprechen und nach Zeit und Frequenz verschachtelt sind, dadurch gekennzeichnet, daß er den Wert sowie die Position im Frequenz f - Zeit t - Raum von Referenzelementen (22) kennt, welche zwischen den digitalen Elementen eingefügt sind, wobei mindestens zwei Datenelemente zwi-

# EP 0 441 731 B1

schen zwei Referenzelementen im Zeitraum und im Frequenzraum eingefügt sind, und,
daß es Mittel zur Analyse (53) der Referenzelemente (22) umfaßt, um durch Interpolation ein interpoliertes Demodulationsreferenzelement festzulegen, welches repräsentativ für die Antwort des Sendekanals in Phase und/oder in Amplitude für jedes der digitalen Elemente ist, wobei die Analysemittel (53) folgendes umfassen:

- erste Mittel (58) zum Speichern der empfangenen Referenzelemente,
- Mittel (59) zur Interpolationsfilterung der empfangenen Referenzelemente nach der Frequenzachse,
- zweite Mittel (60) zum Speichern der Ergebnisse dieser Filterung nach der Frequenzachse,
- Mittel (61$_A$, 61$_B$, 61$_C$) zur Interpolationsfilterung nach der Zeitachse für jede Trägerfrequenz.

6. Empfänger gemäß Anspruch 5,
dadurch gekennzeichnet, daß die Mittel (59) zur Interpolationsfilterung nach der Frequenzachse einen Filter mit endlicher Impulsantwort umfassen.

7. Empfänger gemäß einem der Ansprüche 5 oder 6,
dadurch gekennzeichnet, daß die Mittel (61$_A$, 61$_B$, 61$_C$) zur Interpolationsfilterung nach der Zeitachse eine Batterie von N Filtern mit endlicher Impulsantwort haben, die unabhängig auf jeder der N Trägerfrequenzen arbeiten.

8. Empfänger gemäß einem der Ansprüche 5 bis 7,
dadurch gekennzeichnet, daß er über Mittel zur kohärenten Demodulation (54) durch Projektion der von den digitalen Elementen modulierten Trägerfrequenzen verfügt, wobei die Projektion auf die Ergebnisse wirkt, welche von den Analysemitteln (53) bereitgestellt werden.

## Claims

1. Method of broadcasting digital data to receivers, especially for high-throughput radio broadcasting to mobile receivers, of the type comprising the following steps:

   - coding of the said digital data yielding a series of digital elements;
   - time/frequency interlacing of the said digital elements, so as to distribute them in the frequency f/time t space;
   - modulation of each of the carrier frequencies of a multiplex of orthogonal carrier frequencies by digital elements; and
   - transmission of the said multiplex of carrier frequencies,

   method characterized in that certain of the said digital elements are reference elements (22) whose value and position in the said frequency f/time t space are known to the said receivers, at least two data elements being inserted between two reference elements, in the time space and in the frequency space,
   and in that, on reception, the following processing is carried out:

   - estimation of the response of the transmission channel for each of the said reference elements (22), so as to obtain received demodulation reference samples (31$_i$);
   - determination of a demodulation reference sample (32$_i$) for all the said carrier frequencies and at each instant of transmission, by application of an interpolation filtering applied to the said received demodulation reference samples (31$_i$); and
   - coherent dedmodulation of the said carrier frequencies, by projection of each received carrier modulated by a data element onto the demodulation reference sample (32$_i$).

2. Method according to Claim 1, characterized in that the frequency gap $\Delta F$ between two of the said reference elements (22) is less than or equal to $1/(2.Tm)$, Tm being the maximum value of the spread of the impulse response of the transmission channel.

3. Method according to either one of Claims 1 and 2, characterized in that the time gap $\Delta T$ between two of the said reference elements (22) is less than or equal to $1/(2.f_{max})$, $f_{max}$ being the maximum Doppler frequency determined according to the equation $F_{max} = f_0.v/c$, where:

   - $f_0$ is the maximum carrier frequency,
   - v is the maximum rate of displacement of the said mobiles,

- c is the speed of light.

4. Method according to any one of Claims 1 to 3, characterized in that the said reference elements (22) are equidistributed in the frequency f/time t space, and for example, in quincunx fashion in the said frequency f/time t space, with respect to the frequency dimension and/or to the time dimension.

5. Receiver of a digital signal formed by a multiplex of orthogonal frequencies each modulated by digital elements, the said digital elements corresponding to the coding of digital data and being interlaced in time and in frequency, characterized in that it knows the value and the position in the frequency f/time t space of reference elements (22) inserted among the said digital elements, at least two data elements being inserted between two reference elements, in the time space and in the frequency space, and
in that it comprises means (53) of analysis of the said reference elements (22), so as to determine by interpolation an interpolated demodulation reference element representative of the response of the transmission channel in terms of phase and/or amplitude for each of the said digital elements, the said means (53) of analysis comprising:

- first means (58) of storage of the reference elements received,
- means (59) of interpolation filtering along the frequency axis of the reference elements received,
- second means (60) of storage of the results of the said filtering along the frequency axis,
- means ($61_A$, $61_B$, $61_C$) of interpolation filtering along the time axis, for each of the said carrier frequencies.

6. Receiver according to Claim 5, characterized in that the said means (59) of interpolation filtering along the frequency axis comprises a finite impulse response filter.

7. Receiver according to either one of Claims 5 and 6, characterized in that the said means ($61_A$, $61_B$, $61_C$) of interpolation filtering along the time axis comprise a bank of N finite impulse response filters operating independently on each of the said N carrier frequencies.

8. Receiver according to any one of Claims 5 to 7, characterized in that it comprises means of coherent demodulation (54), by projection of the carriers modulated by the said digital elements, this projection being carried out on the results delivered by the said means (53) of analysis.

Fig. 1

Fig. 2

Fig. 3

Fig. 4

Fig. 5

Fig. 6A

Fig. 6B

Fig. 6C